# EUROPEAN PATENT APPLICATION

(11) **EP 3 249 134 A1**
(43) Date of publication of application: **29.11.2017**
(21) Application number: 16193305.6
(22) Date of filing: 11.10.2016
(51) Int. Cl.: E04F 13/08, E04F 13/18

(54) **WALL AND CEILING TILE WITH ADHESIVE TAPE SECUREMENT SYSTEM**

(30) Priority: 23.05.2016 US 201662340427 P; 12.07.2016 US 201615208084
(71) Applicant: Stone, Norman, Norwalk, CT 06850 (US)
(72) Inventor: Stone, Norman, Norwalk, CT 06850 (US)
(74) Representative: Avidity IP

(57) **Abstract**

A wall and ceiling tile has an adhesive tape securement system for securing the tile to a wall or ceiling. The tile has a main layer formed of a plastic foam board. A front surface of the tile is provided with a design or display of a wood grain, natural stone or any other selected design. Double-sided adhesive tape strips are provided on a back surface of the tile to constitute the adhesive tape securement system. The double -sided adhesive tape strips are located alongside each of the edges of the tile. An additional adhesive strip can be provided between the two elongated opposite edges of the tile. The tile is light weight compared to known tiles of similar size, such that the adhesive tape securement system firmly secures the tile to a wall or ceiling surface.

## Description

### BACKGROUND OF THE INVENTION

### 1. Field of the Invention

This invention is directed to a novel, lightweight wall and ceiling tile that can be secured to a wall or ceiling with double-sided adhesive tape provided at a back surface of the tile.

The lightweight ceiling and wall tile is relatively inexpensive to manufacture and does not require special skills or training to handle and install, making it extremely attractive to do-it-yourself individuals who have had no previous experience installing ceiling tiles and wall tiles.

Known wall tiles that are formed of wood or plastic are usually secured to a wall surface by fasteners, or by using a bonding agent. The fasteners can engage the wall directly or can engage furring strips that are joined to the wall.

When a bonding agent is used to secure the wall tile to a wall, the bonding agent can be coated onto the wall or coated onto substantially the entire back surface of the tile.

Use of fasteners or a coating of bonding material for securing a wall tile to a wall is intended to ensure that the wall tile is firmly attached to the wall. A major consideration in determining whether to use fasteners or a bonding agent to secure a wall tile to a wall is the overall weight of the tile. Generally, either fastener securement or the provision of a bonding agent on a major area of the tile will provide an adequate long lasting connection between the tile and the wall.

However, do-it-yourself individuals who have no previous experience installing a wall tile may not wish to undertake a wall covering project that requires use of a bonding agent or fasteners.

It is known that woodgrain designs and designs that resemble a natural stone or ceramic can be reproduced onto a plastic film that is approximately 0.2 millimeters thick.

It is also known to laminate the design layer film on a relatively robust substrate made of wood, or a composite of wood and plastic material. Generally, the known substrates or base materials for a design layer film are relatively heavy. For example, some known wall tiles or wall panels measuring 5 inches wide and 48 inches long can weigh at least 2 pounds.

Thus, the securement of most known wall tiles to a wall requires the use of fasteners or a bonding agent coating that covers substantially the entire back surface of the tile or wall surface in order to firmly secure the wall tile to a wall.

A known elongated rectangular wall plank formed of a wood or wood composite material includes a front surface with a wood grain design and a back surface with three elongated strips of double-sided adhesive tape. One adhesive strip is at each elongated edge and a third adhesive strip is located midway between the elongated edge strips. The strips extend the full length of the plank.

The plank is secured to a wall by applying pressure to the front surface while the back surface faces the wall to enable the adhesive strips to contact the wall surface and adhere the plank to the wall surface.

It has been found that wall planks formed of wood or wood composite material have a tendency to warp whereby the plank can develop a curvature. The plank curvature can cause previously adhered adhesive tape portions of the plank to detach from the wall surface.

Thus, a warped wall plank can cause a failure of the adhesive tape bond between the wall plank and the wall surface. The warped wall plank can be replaced or fasteners can be used to re-secure the wall plank to the wall surface.

Because of the problem of plank warpage and detachment from a wall surface it has not been feasible to use adhesive tape to secure a wood or wood composite plank to a ceiling, since warpage and the weight of the plank may cause the plank to fall from the ceiling.

Applicant has discovered a novel, lightweight wall and ceiling tile that can be secured to a wall or ceiling with double-sided adhesive tape provided at a back surface of the tile. Applicant joins a design layer film having a woodgrain design, for example, to a relatively lightweight base material, such as a foam board having a thickness of approximately 3 millimeters and density of approximately 500 kg/m³. Under this arrangement applicant uses a lightweight foam board as the main component of a versatile plank or tile that can be adhesively secured to a wall or ceiling. Applicant provides a 5 inch by 36 inch tile that weighs less than 8 ounces or a 5 inch by 48 inch tile that weighs less than 11 ounces. Applicant's tile is thus lightweight compared to known tiles of similar size.

Applicant has discovered that he can secure his lightweight tile to a wall or ceiling, without fasteners and without coating the tile with bonding materials. Instead, applicant has found that he can use approximately four to five strips of one-half to three-quarter inch wide double-sided adhesive tape on the back surface of the tile to secure the tile to a wall or ceiling.

Applicant firmly secures his lightweight tile to a wall or ceiling surface by locating the double-sided adhesive tape at each edge portion of the tile on the back of the surface of the tile. If desired, a fifth double-sided adhesive strip can be placed between two of the elongated edges of the tile. The wall or ceiling tile is secured to a flat, planar ceiling or wall surface by pressing the front surface of the tile against the ceiling or wall surface. Applicant's tile thus facilitates the installation of a wall or ceiling covering that resembles natural wood or stone. Because there is no need to use fasteners or tile bonding agents that cover substantially the entire back surface of the tile, a wall or ceiling covering installation is immensely simplified for do-it-yourselfers with little or no experience installing wall or ceiling tiles.

Applicant has also found that the foam board tile is not subject to warpage. Thus, there is no risk of warpage induced detachment of the tile from a wall or ceiling surface.

Applicant's tile, because of its lightweight characteristics compared to known tiles of similar size and the firm adhesive tape securement to a surface, is utilizable as a ceiling tile as well as a wall tile because the bond between the adhesive tape and a ceiling surface provide sufficient adhesion to overcome the force of gravity on the installed ceiling tile.

Thus, applicant's tile is usable as a wall or ceiling tile without the need for fasteners or full surface adhesive coatings.

### DESCRIPTION OF THE DRAWINGS

In the accompanying drawings,
Fig. 1 is a simplified perspective view of the front surface of a wall or ceiling tile incorporating one embodiment of the invention wherein a portion of the woodgrain design film is broken away to show the underlying surface of the tile;
Fig. 2 is a simplified perspective view of the back surface of the wall or ceiling tile of Fig. 1;
Fig. 3 is an enlarged simplified perspective view of the back surface of the wall or ceiling tile of Fig. 2 showing release paper being removed from an adhesive surface of a double-sided adhesive tape that is located on the back surface of the wall or ceiling tile; and,
Fig. 4 is a simplified view of an installation of wall tiles on a wall surface.

Corresponding reference numbers indicate corresponding parts throughout the several views of the drawings.

### DETAILED DESCRIPTION OF THE INVENTION

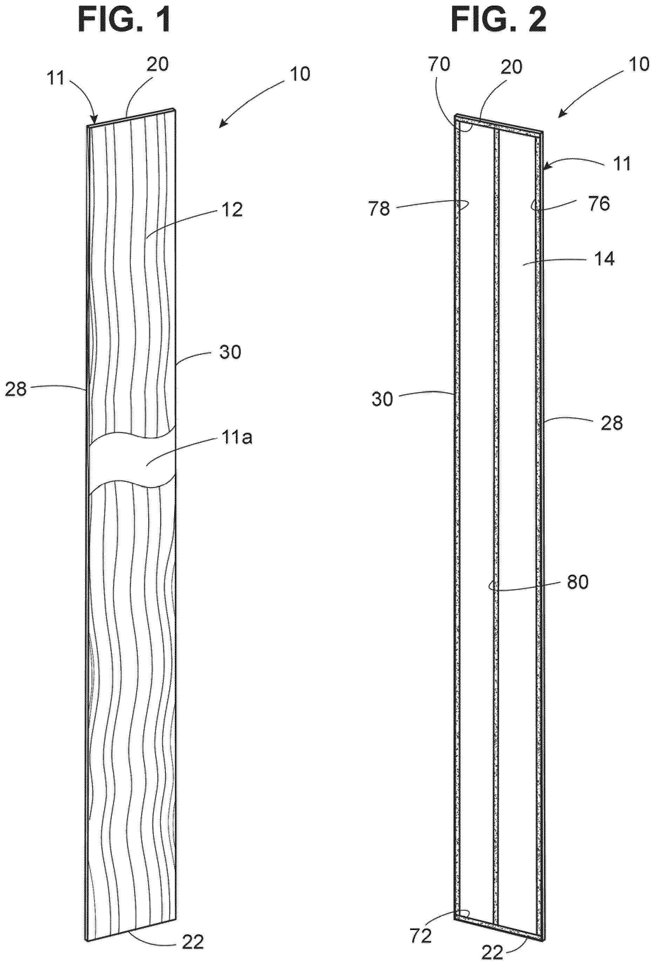

Referring to the drawings, a wall or ceiling tile (hereinafter referred to as "the tile") incorporating one embodiment of the invention is generally indicated by the reference number 10 in Fig. 1.

The tile 10 is in the shape of an elongated rectangle having a main layer 11 formed of a plastic foam board material, approximately 5 to 6 inches wide by 36 to 48 inches long with a density of approximately 500 kg/m³. The thickness of the main layer 11 is approximately 3.0 millimeters. If desired, the foam board of the main layer 11 can be PVC free. The tile 10 can also be made in a 5 inch by 12 inch or 5 inch by 24 inch size.

The tile 10 has a front display or design 12 (Fig. 1) that resembles a wood grain, natural stone or any other selected design or color. The design on the display 12 is incorporated in a known plastic design film that is bonded or laminated in a suitable known manner to a front surface 11a (Fig. 1) of the main layer 11. The main layer 11 also includes an opposite back surface or securement surface 14 (Fig. 2). The tile 10 has opposite end edges 20 and 22, and opposite elongated side edges 28 and 30 that define the periphery of the tile 10.

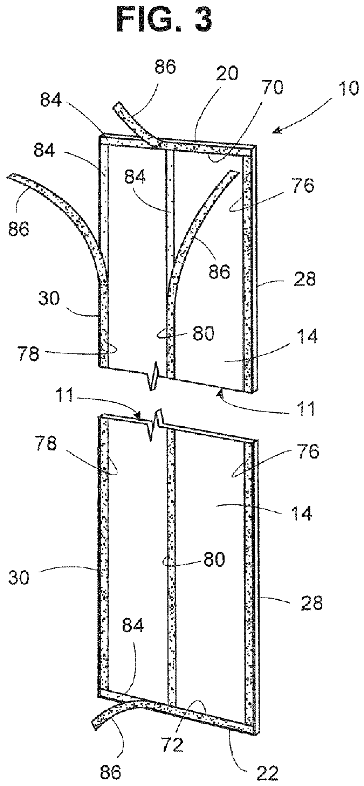

Referring to Figs. 2 and 3, applicant provides relatively short continuous strips of double-sided adhesive tape 70 and 72, approximately ½ to ¾ of an inch wide and approximately 1 millimeter thick, alongside the respective relatively short end edges 20 and 22 at the back surface 14 of the tile 10. The relatively short adhesive tape strips 70 and 72 extend from one elongated side edge 28 of the tile 10 to the opposite elongated side edge 30. A suitable known double-sided adhesive tape is made by the 3M Company under the product number 23069.

Applicant also provides elongated strips of double-sided adhesive tape 76 and 78, similar in width to the width of the double-sided adhesive tapes 70 and 72, alongside the elongated side edges 28 and 30 at the back surface 14 of the tile 10. As shown in Figs. 2 and 3, these elongated side edge adhesive tape strips 76 and 78 extend from the relatively short adhesive tape strip 70 at one end of the tile 10 to the relatively short adhesive tape strip 72 at the opposite end of the tile 10. Thus the opposite ends of the elongated adhesive tape strips 76 and 78 can abut, but do not overlay the relatively short adhesive tape strips 70 and 72.

If desired, an additional elongated strip of double-sided adhesive tape 80 can be provided on the back surface 14 of the tile 10 midway between the elongated side edge tape strips 76 and 78. The elongated middle adhesive tape strip 80 is substantially parallel to the elongated adhesive tape strips 76 and 78 and extends from the relatively short adhesive tape strip 70 to the relatively short adhesive tape strip 72. The opposite ends of the elongated middle tape strip 80 can abut but do not overlay the relatively short adhesive tape strips 70 and 72.

An adhesive securement surface 84 of each of the adhesive tape strips 70, 72, 76, 78, and 80 is initially covered with a removable release paper 86 (Fig. 3) that is removed just prior to installation of the tile 10 on a wall surface or a ceiling surface. Preferably the release paper 86 is a known silicon treated paper.

The double-sided adhesive tape strips 70, 72, 76, and 78 constitute the system for securing the tile 10 to a wall surface or ceiling surface. The middle adhesive tape strip 80 is optional.

The adhesive tape securement system has been found to provide a sufficiently powerful adhesive bond between the tile 10 and the wall or ceiling surface that there is little likelihood of unintentional tile detachment from its installation position.

Furthermore, because of the light weight of the tile 10 compared to known tiles of similar peripheral size and the adhesive tape securement system that firmly secures the tile 10 to a wall or ceiling surface, there is no need for fasteners or a full surface coating of bonding material on the back surface of the tile.

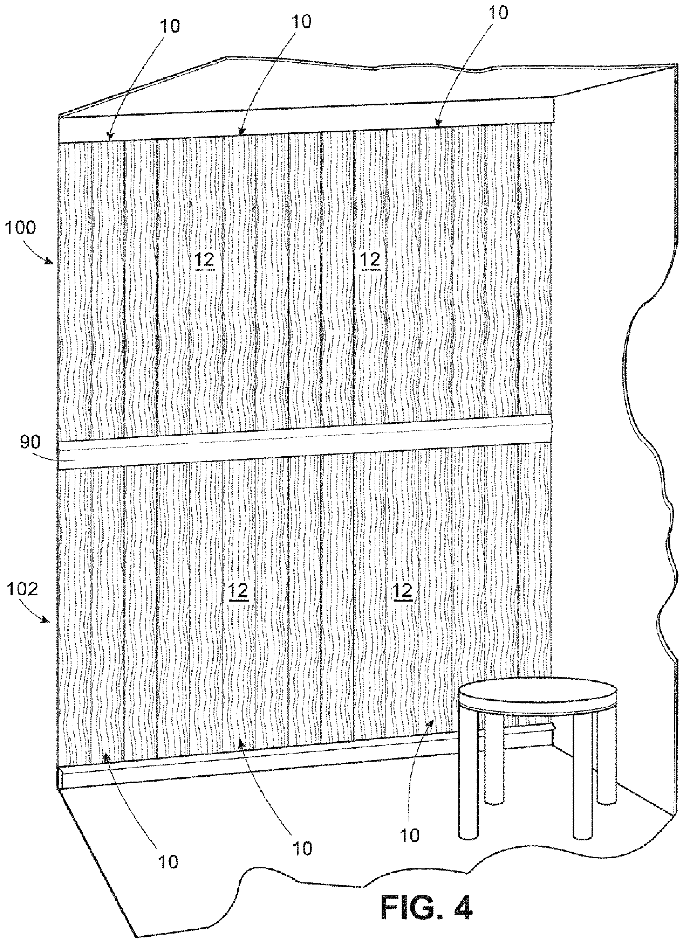

In one type of a wall tile securement arrangement on a wall as shown in Fig. 4 an upper row 100 of the wall tiles 10 is separated from a lower row 102 of wall tiles 10 by a horizontal molding panel 90. The molding panel 90 can overlay the confronting end portions of the tiles 10 in the rows 100 and 102 or the end portions of the confronting tiles 10, in the rows 100 and 102 can abut the molding panel 86.

Although not shown, the rows 100 and 102 of the wall tiles 10 can be installed without the middle molding panel 90 in an arrangement similar to that shown in Fig. 4, or the wall tiles 10 can be installed in a staggered arrangement (not shown). Thus the arrangement of the wall tiles 10 on a wall surface is a matter of choice.

The tile 10 can also be secured to a ceiling surface in a manner similar to that previously described for securement of the tile 10 to a wall. The tile 10 can thus be used as a ceiling tile as well as a wall tile. The firm bond between the tile 10 and a wall or ceiling surface provided by the adhesive securement system ensures that the tile 10 can be quickly and easily installed by a do-it-yourselfer having no previous tile installation experience.

Furthermore, the light weight of the tile 10 compared to known tiles of similar size can significantly reduce shipping and freight costs that are usually based on weight. Another advantage of the tile 10, because of its light weight is that a greater quantity of the tiles 10 can be packaged in cartons that usually accommodate known tiles of similar peripheral size.

As various changes can be made in the above constructions and methods without departing from the scope of the invention, it is intended that all matter contained in the above description or shown in the accompanying drawings shall be interpreted as illustrative and not a limiting sense

## Claims

1. A wall and ceiling tile comprising,
a) a tile member unit having a polygonal shape with opposite side edges and opposite end edges, a front surface and a back surface, and a predetermined thickness between the front surface and the back surface,
b) said tile member unit including a foam plastic material main layer having a front foam surface and a back foam surface, the back foam surface of the main layer being the back surface of the tile member unit,
c) a design film joined to the front foam surface of the main layer, and
d) an adhesive securement system joined to the back foam surface of the main layer, the adhesive securement system including,
(i) a first strip of double-sided adhesive tape alongside one of the opposite end edges and extending from one of the opposite side edges to the other opposite side edge,
(ii) a second strip of double-sided adhesive tape alongside the other opposite end edge and extending from one of the opposite side edges to the other opposite side edge,
(iii) a third strip of double-sided adhesive tape alongside one of the opposite side edges and extending from the first strip of double-sided adhesive tape to the second strip of double-sided adhesive tape, and
(iv) a fourth strip of doubled-sided adhesive tape alongside the other opposite side edge and extending from the first strip of double-sided adhesive tape to the second strip of double-sided adhesive tape.

2. The wall and ceiling tile as claimed in claim 1 wherein the foam plastic material of the main layer is a plastic foam board.

3. The wall and ceiling tile as claimed in claim 2 wherein the density of the plastic foam board is approximately 500 kg/m³.

4. The wall and ceiling tile as claimed in claim 1 wherein the polygonal shape of the tile member unit is an elongated rectangle and the opposite end edges of the elongated rectangle are of relatively short extent compared to the extent of the opposite side edges.

5. The wall and ceiling tile as claimed in claim 4 wherein the opposite end edges are approximately 5 inches to 6 inches wide and the opposite side edges are approximately 12 inches to 48 inches long.

6. The wall and ceiling tile of claim 5 wherein the thickness between the front surface and the back surface of the tile member unit is approximately 3 to 3.2 millimeters.

7. The wall and ceiling tile as claimed in claim 5 wherein the weight of the tile member unit is less than 8 ounces for a 5 inch by 36 inch tile member unit and less than 11 ounces for a 5 inch by 48 inch tile member unit.

8. The wall and ceiling tile as claimed in claim 1 wherein the adhesive securement system includes a fifth strip of double-sided adhesive tape joined to the back foam surface of the main layer between the third and fourth adhesive tape strips, said fifth strip of adhesive tape extending from the first strip of double-sided adhesive tape to the second strip of double-sided adhesive tape.

9. A wall and ceiling tile comprising,
a) a tile member unit having a rectangular shape with opposite elongated side edges and opposite end edges that are shorter than the side edges, a front surface and a back surface, and a predetermined thickness between the front surface and the back surface,
b) said tile member unit including a plastic foam board main layer having a front surface and a back surface, the back surface of the main layer being the back surface of the tile member unit,
c) a design film with a woodgrain, natural stone or color design joined to the front surface of the main layer,
d) an adhesive securement system joined to the back surface of the main layer, the adhesive securement system including,
(i) first and second strips of double-sided adhesive tape respectively located alongside each of the opposite end edges and extending from one of the elongated opposite side edges to the other elongated opposite side edge;
(ii) third and fourth strips of double-sided adhesive tape respectively located alongside each of the opposite side edges and extending to the first and second strips of double-sided adhesive tape; and,
e) the thickness between the front surface and the back surface of the tile member unit is approximately 3 to 3.2 millimeters and the density of the foam board is approximately 500 kg/m³ such that a 5 inch by 36 inch tile member unit weighs less than 10 ounces and a 5 inch by 48 inch tile member unit weighs less than 11 ounces, whereby the tile member unit can be secured to a wall or ceiling surface by the adhesive securement system.

10. The method of claim 9 wherein the adhesive securement system includes a fifth strip of double-sided adhesive tape joined to the back foam surface of the main layer between the third and fourth adhesive tape strips, said fifth strip of adhesive tape extending from the first strip of double-sided adhesive tape to the second strip of double-sided adhesive tape.

11. A method of preparing a wall and ceiling tile for installation on wall and ceilings comprising,
a) forming a tile member unit with a polygonal shape, opposite side edges and opposite end edges, a front surface and a back surface, and a predetermined thickness between the front surface and the back surface,
b) providing the tile member unit with a foam plastic material main layer having a front foam surface and a back foam surface, such that the back foam surface of the main layer is the back surface of the tile member unit,
c) providing the tile member unit with a design or display on the front foam surface of the main layer, and
d) providing an adhesive securement system on the back foam surface of the main layer by,
(i) securing a first strip of double-sided adhesive tape alongside one of the opposite end edges to extend from one of the opposite side edges to the other opposite side edge,
(ii) securing a second strip of double-sided adhesive tape alongside the other opposite end edge to extend from one of the opposite side edges to the other opposite side edge,
(iii) securing a third strip of double-sided adhesive tape alongside one of the opposite side edges to extend from the first strip of double-sided adhesive tape to the second strip of double-sided adhesive tape, and
(iv)securing a fourth strip of double-sided adhesive tape alongside the other opposite side edge to extend from the first strip of double-sided adhesive tape to the second strip of double-sided adhesive tape.

12. The method of claim 11 including forming the foam plastic material of the main layer with a plastic foam board with an approximate thickness of 3 to 3.2 millimeters between the front surface and the back surface and a density of approximately 500 kg/m3.

13. The method of claim 11 including forming the tile member unit as an elongated rectangle wherein the opposite end edges of the elongated rectangle are of relatively short extent compared to the extent of the opposite side edges such that the opposite end edges are approximately 5 inches to 6 inches wide and the opposite side edges are approximately 12 inches to 48 inches long.

14. The method of claim 13 including limiting the weight of the tile member unit to less than 8 ounces for a 5 inch by 36 inch tile member unit and less than 11 ounces for an 5 inch by 48 inch tile member unit.

15. The method of claim 11 including securing a fifth strip of double-sided adhesive tape to the back foam surface between the third and fourth adhesive tape strips, to extend from the first strip of double-sided adhesive tape to the second strip of double-sided adhesive tape.
